# EUROPEAN PATENT APPLICATION

(11) **EP 4 844 974 A1**
(43) Date of publication of application: **25.11.2026**
(21) Application number: 25177875.9
(22) Date of filing: 21.05.2025
(51) Int. Cl.: H02J 3/36, H02J 3/38

(54) **METHOD AND CONTROLLER FOR CONTROLLING A PLURALITY OF POWER CONVERTERS**

(71) Applicant: GE Vernova Technology GmbH, 5400 Baden (CH)
(72) Inventor: LIU, Hanchao, Niskayuna, 12309-1027 (US); HAFEZI, Hossein, 33730 Tampere (FI); RAMAN VASUDEVAN, Krishnakumar, 560066 Bengaluru (IN); GUO, Xian, Niskayuna, 12309-1027 (US)
(74) Representative: Openshaw & Co.

(57) **Abstract**

Method (700), and controller (160), for controlling a plurality of power converters (520) connected in parallel in a grid-forming mode. The method (700) comprises acquiring (s720) an average voltage of the plurality of power converters (520); determining (s760) a first control signal for grid-forming, wherein the first control signal is based at least partly on the average voltage and a reference voltage; acquiring (s780) for each power converter (522, 524, 526) of the plurality of power converters (520), a differential signal based on the average voltage and a voltage of the respective power converter (522, 524, 526); determining (s790) a plurality of second control signals for grid-forming, wherein each second control signal in the plurality of second control signals is for a respective power converter (522, 524, 526) of the plurality of power converters (520), wherein each second control signal is based at least partly on the first control signal and the differential signal of the respective power converter (522, 524, 526); and outputting (s795) the plurality of second control signals, for controlling the plurality of power converters (520) in the grid-forming mode.

## Description

### FIELD OF THE INVENTION

The present invention relates to a method and a controller for controlling a plurality of power converters, and more particularly to a method and a controller for controlling a plurality of power converters connected in parallel in a grid-forming mode.

### BACKGROUND

In high voltage direct current (HVDC) power transmission networks alternating current (AC) power is typically converted to direct current (DC) power for transmission via a power transmission medium, for example overhead lines, under-sea cables, and/or underground cables. The conversion between DC power and AC power is utilised where it is necessary to interconnect DC and AC power, for example between an AC grid and a HVDC transmission line. In power transmission networks, power conversion means, also known as converter stations (i.e., power converters in converter stations, power inverters etc.) are required at each interface or interconnection between AC and DC power to implement the required conversion from AC to DC or from DC to AC.

A type of power electronics device used in some HVDC transmission systems is a power converter. A Voltage Source Converter (VSC) is a type of power converter. The VSC may reside in a static synchronous compensator (STATCOM). The VSC may be arranged as a Modular Multilevel Converter (MMC).

A single VSC may be operated in a grid-forming (GFM) mode using conventional control methods and controllers. However, conventional methods and controllers tend not to be suitable for controlling a plurality of VSCs operating in a GFM mode. There thus remains scope for providing improvements in controlling a plurality of VSCs in a GFM mode.

### SUMMARY OF THE INVENTION

According to a first aspect of the invention, there is provided a method for controlling a plurality of power converters connected in parallel in a grid-forming mode. The method comprises acquiring, at a controller, an average voltage of the plurality of power converters; determining, by the controller, a first control signal for grid-forming, wherein the first control signal is based at least partly on the average voltage and a reference voltage; acquiring, by the controller, for each power converter of the plurality of power converters, a differential signal based on the average voltage and a voltage of the respective power converter; determining, by the controller, a plurality of second control signals for grid-forming, wherein each second control signal in the plurality of second control signals is for a respective power converter of the plurality of power converters, wherein each second control signal is based at least partly on the first control signal and the differential signal of the respective power converter; and outputting, by the controller, the plurality of second control signals, for controlling the plurality of power converters in the grid-forming mode.

The method may be a computer-implemented method.

The voltage reference may be a desired setpoint of the power converter.

The voltage reference may be a DC voltage reference.

The step of acquiring the average voltage of the plurality of power converters may comprise receiving, at the controller, the voltage for each power converter of the plurality of power converters; and calculating, by the controller, the average voltage based on the voltage for each power converter.

The step of acquiring, for each power converter of the plurality of power converters, the differential signal may comprise determining, by the controller, for each power converter of the plurality of power converters, the differential signal based on a difference between the average voltage and the voltage of the respective power converter.

Determining the differential signal for each respective power converter may comprise comparing the average voltage with the voltage of the respective power converter to determine a respective difference, and inputting the respective difference into a first Proportional-Integral, PI, or Proportional-Integral-Derivative, PID, controller to generate the differential signal for each power converter.

The voltage of each power converter may be a time averaged voltage of the power converter.

The time averaged voltage may be of submodules or valves of the power converter.

Determining the first control signal may comprise subtracting the average voltage from the reference voltage to determine a first product; determining a power reference based on the first product; and determining the first control signal based on the power reference.

The power reference may be determined by inputting the first product into a second Proportional-Integral, PI, or Proportional-Integral-Derivative, PID, controller to generate the power reference.

The method may further comprise receiving, at the controller, a reactive power reference.

Determining the first control signal may comprise inputting the power reference and the reactive power reference into a grid-forming control system to generate the first control signal.

Determining the plurality of second control signals may comprise, for each power converter of the plurality of power converters, subtracting the differential signal of the respective power converter from the first control signal.

Subtracting the differential signal of the respective power converter from the first control signal may be for correcting an error in the first control signal for each respective power converter, such that the plurality of power converters can operate, as a group, to support an AC network in a grid-forming mode.

According to a second aspect of the invention, there is provided a controller for controlling a plurality of power converters connected in parallel in a grid-forming mode. The controller is configured to acquire an average voltage of the plurality of power converters; determine a first control signal for grid-forming, wherein the first control signal is based at least partly on the average voltage and a reference voltage; acquire, for each power converter of the plurality of power converters, a differential signal based on the average voltage and a voltage of the respective power converter; determine a plurality of second control signals for grid-forming, wherein each second control signal in the plurality of second control signals is for a respective power converter of the plurality of power converters, wherein each second control signal is based at least partly on the first control signal and the differential signal of the respective power converter; and output the plurality of second control signals, to control the plurality of power converters in the grid-forming mode.

Generally, the controller disclosed herein tends to be configured to execute the methods disclosed herein.

The controller may be a grid-side controller.

The controller may be configured to output the plurality of second control signals to converter controllers of the respective power converters.

Each of the plurality of power converters may be modular multilevel converters.

According to a third aspect of the invention, there is provided a system comprising a static synchronous compensator (STATCOM) comprising a plurality of power converters connected in parallel, wherein the STATCOM is connected to an AC network; and the controller of the second aspect configured to output the plurality of second control signals, to control the plurality of power converters in a grid-forming mode, to support the AC network.

According to a fourth aspect, there is provided a computer program comprising instructions which when executed by a processor of a controller, cause the controller to perform the method of the first aspect.

According to a fifth aspect, there is provided a non-transitory computer-readable storage medium comprising the computer program of the fourth aspect.

It will be appreciated that particular features of different aspects of the invention share the technical effects and benefits of corresponding features of other aspects of the invention. More specifically, the technical effects and benefits of the controller, the system, the computer program, and the non-transitory computer-readable medium, are shared by the method of the invention.

It will also be appreciated that the use of the terms "first" and "second", and the like, are merely intended to help distinguish between similar features and are not intended to indicate a relative importance of one feature over another, unless otherwise specified.

Within the scope of this application, it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible.

### BRIEF DESCRIPTION OF THE DRAWINGS

Figure 1 is a schematic illustration of a power transmission network;
Figure 2 is a schematic illustration of a system comprising a controller, a STATCOM, and an AC network;
Figure 3 is a schematic illustration of an example power converter;
Figure 4 is a schematic illustration of a system comprising a STATCOM that comprises a single power converter;
Figure 5 is a schematic illustration of a system comprising a STATCOM that comprises a plurality of power converters connected in parallel;
Figure 6 is a schematic illustration of a control system for controlling a plurality of power converters; and
Figure 7 is a process flow chart showing steps of a method for controlling a plurality of power converters.

### DETAILED DESCRIPTION

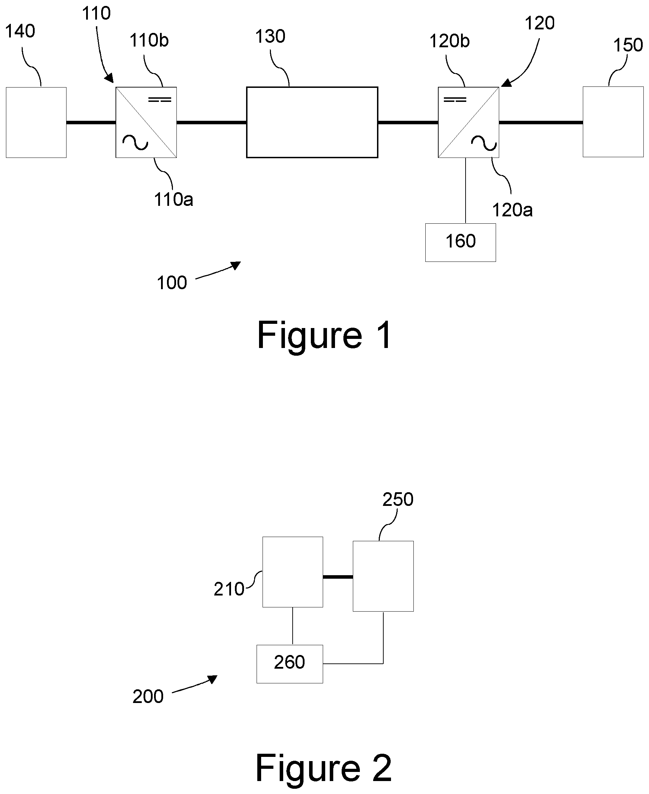

Figure 1 illustrates a power transmission network 100. The illustration is not intended to be limited to representing a particular power transmission scheme, such as a monopole or a bipole High Voltage Direct Current (HVDC) transmission network. In this manner, the power transmission network 100 may represent, generically, a monopole or bipole scheme, or may represent a multiterminal power transmission scheme, for instance. Hence whilst specific features in the illustration are shown connected to each other with a specific number of connections, it will be understood that this is not intended to be limiting either. Related, is that relative dimensions or distances between components perceived in the illustration are also not intended to be limiting.

The power transmission network 100 includes a first power converter 110 (also known as a converter, inverter, etc.), a second power converter 120, a transmission medium 130, a first AC network 140, a second AC network 150, and a controller 160.

The controller 160 is arranged to be communicatively coupled to the second power converter 120 in order to control the second power converter 120, for example by executing the methods described herein. Such a controller 160 may be referred to as a controller means or control means, and is discussed in more detail below.

The first power converter 110 and the second power converter 120 are each an example of a power electronics device.

The power converters 110, 120, are configured to convert AC power to DC power, acting essentially as rectifiers; or DC power to AC power, acting essentially as inverters. The power converters 110, 120 may each comprise a single converter in the case of a monopole system, or two converters in the case of a bipole system. The power converters 110, 120 may represent a plurality of converter stations arranged as a multi-terminal power transmission system. Generically, the first power converter 110 comprises a first AC side 110a and a first DC side 110b. Generically, the second power converter 120 comprises a second AC side 120a and a second DC side 120b.

The first power converter 110 is connected to a first AC network 140. The first AC network 140 is connected to the first AC side 110a of the first power converter 110. The second power converter 120 is connected to a second AC network 150. The second AC network 150 is connected to the second AC side 120a of the second power converter 120.

The first AC network 140 and/or second AC network 150 may be electrical power transmission systems comprising power generation apparatus, transmission apparatus, distribution apparatus, and electrical loads. The first AC network 140 and/or second AC network 150 may comprise a renewable power generation network such as a wind-power generation network, solar-power generation network, bio-power generation network. The first AC network 140 or second AC network 150 may be a consumer network, or a network containing a mix of consumers and generators. By way of non-limiting example, the first AC network 140 may be a power generation network, with second AC network 150 being a network containing a mix of consumers and generators, for instance. In particular examples, the power converters 110, 120 may be geographically remote. For instance, the first power converter 110 may reside on an off-shore platform connected to a wind farm, and the second power converter 120 may reside on-shore.

The power transmission medium 130 connects the first power converter 110 and the second power converter 120. The power transmission medium 130 is connected between the first DC side 110b of the first power converter 110 and the second DC side 120b of the second power converter 120. The power transmission medium 130 may comprise electrical cables and other electrical components for connecting the first and second power converters 110, 120. For instance, the power transmission medium 130 may comprise a conductor providing a first electrical pole and/or a conductor providing a second electrical pole. A neutral arrangement may also be provided interconnecting the first and second power converters 110, 120. The power transmission medium 130 provides the medium through which DC power is transferred between the power converters 110, 120.

The operation of the power transmission network 100 can be generically described as follows. The first AC network 140 generates AC power that is provided to the first power converter 110 at the first AC side 110a. The first power converter 110 converts the received AC power to DC power for transmission to the transmission medium 130. The DC power is transmitted from the first DC side 110b of the first power converter 110 to the transmission medium 130. The second DC side 120b of the second power converter 120 receives DC power from the transmission medium 130. The second power converter 120 converts the received DC power to AC power. The AC power is then provided from the second AC side 120a of the second power converter 120 to the second AC network 150 for consumption, for instance.

As the second power converter 120 receives power from the transmission medium 130, the first power converter 110 transfers power from the AC network 140 to the transmission medium 130, such that the nominal voltage of the transmission medium 130 is maintained.

Additionally, in some circumstances, the first power converter 110 can also receive power from the transmission medium 130. The first power converter 110 can thus be configured to transfer real or reactive power in either direction, into or out of the first AC network 140. The second power converter 120 can also be configured to transfer real or reactive power in either direction, into or out of the second AC network 150.

The power transmission network 100 may be operated using methods such as synchronous grid forming (SGFM) wherein either or both of the power converters 110, 120 behave as three-phase, positive-phase sequence AC voltage sources behind an impedance, that operate at a frequency synchronous with other SGFM sources connected to the power transmission network 100.

The power transmission network 100 may further comprise controllers for controlling operations of components of the power transmission network 100.

Figure 2 shows an example of a system 200 comprising a controller 260 connected to a static synchronous compensator (STATCOM) 210 and a third AC network 250. The STATCOM 210 is connected to the third AC network 250. The third AC network 250 may be part of or the same as the second AC network 150 shown in Figure 1.

The STATCOM 210 is an example of a power electronics device or a power converter.

The controller 260 is arranged to be communicatively coupled to the STATCOM 210 in order to control the STATCOM 210 by executing the methods described herein. Such a controller may be referred to as a controller means or control means, and is described in more detail later below.

The STATCOM 210 is configured such that real and/or reactive power can be transferred between the STATCOM 210 and the third AC network 250.

The STATCOM 210 generally tends to provide a source or sink of reactive power for the third AC network 250 with a fast-response time. Thus, in the event of a sudden load change in the third AC network 250, reactive power tends to be transferred into or out of the STATCOM 210, in order to maintain stability of the third AC network 250.

It will be appreciated that various other electrical components may be located at any particular location or with any particular feature/component in the example power transmission network 100 or system 200. These may include switches, transformers, resistors, reactors, surge arrestors, harmonic filters and other components well known in the art.

It will be appreciated that converters or power conversion means may comprise a number of different technologies such as voltage sourced converters (for instance using insulated gate bipolar transistor (IGBT) valves). Such converters may generally be considered to use 'power electronics'. Power electronic converters may comprise multi-level voltage sourced converters, for instance.

It will be appreciated that cables used as power transmission mediums may comprise the following non-limiting examples of crosslinked polyethylene (XLPE) and/or mass impregnated (MI) insulation cables. Such cables may comprise a conductor (such as copper or Aluminium) surrounded by a layer of insulation. Dimensions of cables and their associated layers may be varied according to the specific application (and in particular, operational voltage requirements). Cables may further comprise strengthening or 'armouring' in applications such as subsea installation. Cables may further comprise sheaths/screens that are earthed at one or more locations.

Moreover, it will be understood that the power transmission network 100 may be used with three-phase power systems. In a three-phase power system, three conductors supply respective first, second and third phases of AC power to a consumer. Each of the first, second and third phases will typically have equal magnitude voltages or currents, which are displaced in phase from each other by 120°.

In a three-phase power system, phase currents and voltages can be represented by three single phase components: a positive sequence component; a negative sequence component; and a zero-sequence component. It is the positive sequence component that rotates in phase in accordance with the power system. Hence, in a preferred scenario, only positive sequence voltage/current will exist. It will be understood that an unbalance in voltage or current between the first, second and third-phases, of a three-phase system, in magnitude or phase angle, can give rise to undesirable negative or zero-sequence components. Such an unbalance can be caused by fault conditions, for instance in the first, second and/or third AC networks 140, 150, 250.

The controllers 160, 260 are controllers or control means configured to control a power converter. References to a controller herein is a reference to either one of the controllers 160, 260. In other words, both of the controllers 160, 260 are configured in a substantially similar way, and therefore, unless stated otherwise, the following descriptions of a controller are applicable to either one or both of the controllers 160, 260.

A power converter is an electrical device configured to convert, supply, and/or transfer real and/or reactive electrical power. A power converter may be operated as a Voltage Source Converter (VSC). A static synchronous compensator (STATCOM) is a type of power converter. A STATCOM may be operated as a VSC. A power converter or STATCOM may be arranged as a Modular Multilevel Converter (MMC or M2C).

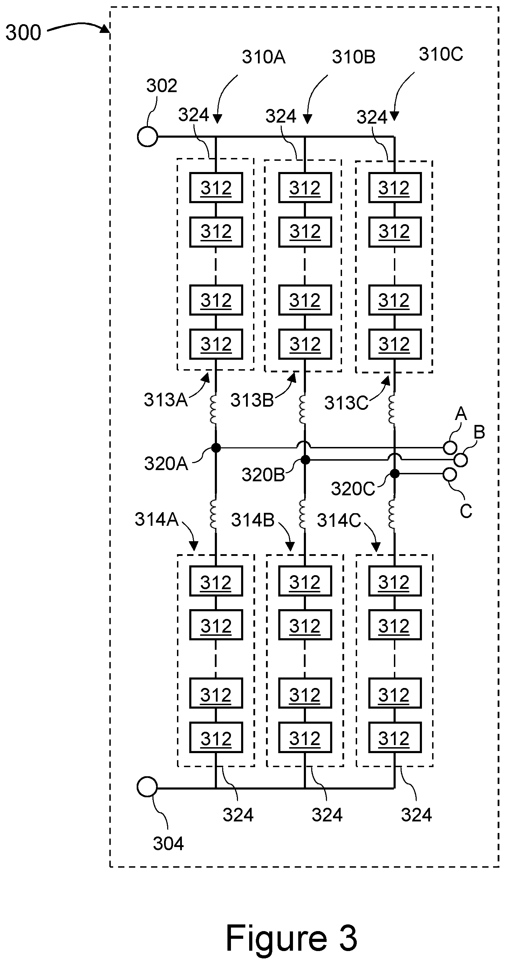

Figure 3 is a schematic illustration (not to scale) showing an example of a modular multilevel power converter 300. The power converter 300 may be the second power converter 120 shown in Figure 1, operating as a VSC.

The power converter 300 includes first and second DC terminals 302, 304. The first and second DC terminals 302, 304 are connected to a DC source for example, the power transmission medium 130.

A first converter phase 310A, a second converter phase 310B, and a third converter phase 310C (alternatively referred to as phase units, converter limbs etc.), extends between the first and second DC terminals 302, 304. The first, second and third converter phases 310A, 310B, 310C each correspond to a given phase A, B, C of a three-phase AC network.

Each converter phase 310A, 310B, 310C includes a first phase arm 313A, 313B, 313C (alternatively referred to as a limb portion), and second phase arm 314A, 314B, 314C. Each first phase arm 313A, 313B, 313C may be connected to a positive pole of the power transmission medium 130. Each second phase arm 314A, 314B, 314C may be connected to a negative pole of the power transmission medium 130. The first and second phase arms 313A, 313B, 313C, 314A, 314B, 314C are separated by corresponding AC terminals 320A, 320B, 320C.

Each AC terminal 320A, 320B, 320C is connected to a respective phase A, B, C of the three-phase AC network. The three-phase AC network may be, for example, the second AC network 150 as shown in Figure 1.

Other embodiments of the invention may include fewer than or greater than three converter phases, depending on the configuration of an associated AC network.

Each phase arm 313A, 313B, 313C, 314A, 314B, 314C includes a valve 324 (alternatively referred to as a chain-link converter) which extends between the associated AC terminal 320A, 320B, 320C and a corresponding one of the first or the second DC terminal 302, 304.

Each valve 324 includes a plurality of series connected submodules 312 (alternatively referred to as chain-link modules, or a plurality of modules or cells).

Each submodule 312 includes a number of switching elements (not shown) which are connected to an energy storage device in the form of a capacitor, although other types of energy storage device, i.e., any device that is capable of storing and releasing energy to selectively provide a voltage, for example a fuel cell or battery, may also be used.

Each switching element typically includes a semiconductor device, typically in the form of an Insulated Gate Bipolar Transistor (IGBT).

It is, however, possible to use other types of self-commutated semiconductor devices, such as a gate turn-off thyristor (GTO), a field effect transistor (FET), a metal-oxide-semiconductor field-effect transistor (MOSFET), an injection-enhanced gate transistor (IEGT), an integrated gate commutated thyristor (IGCT), a bimode insulated gate transistor (BIGT) or any other self-commutated switching device. In addition, one or more of the semiconductor devices may instead include a wide-bandgap material such as, but not limited to, silicon carbide, boron nitride, gallium nitride and aluminium nitride.

The number of semiconductor devices in each switching element may vary depending on the required voltage and current ratings of that switching element.

Each of the switching elements may also include a passive current check element that is connected in anti-parallel with a corresponding semiconductor device. The or each passive current check element may include at least one passive current check device. The or each passive current check device may be any device that is capable of limiting current flow in only one direction, e.g. a diode. The number of passive current check devices in each passive current check element may vary depending on the required voltage and current ratings of that passive current check element.

A first exemplary submodule may include a first pair of switching elements that are connected in parallel with a capacitor in a known half-bridge arrangement to define a 2-quadrant unipolar module. Switching of the switching elements selectively directs current through the capacitor or causes current to bypass the capacitor, such that the first exemplary submodule can provide zero or positive voltage and can conduct current in two directions.

A second exemplary submodule may include first and second pairs of switching elements and a capacitor are connected in a known full bridge arrangement to define a 4-quadrant bipolar module. In a similar manner to the first exemplary chain-link module, switching of the switching elements again selectively directs current through the capacitor or causes current to bypass the capacitor such that the second exemplary submodule can provide zero, positive or negative voltage and can conduct current in two directions.

Each valve 324 may include solely first exemplary submodules, solely second exemplary submodules, or a combination of first and second exemplary submodules.

In any event, the provision of a plurality of submodules 312 means that it is possible to build up a combined voltage across each valve 324, via the insertion of the energy storage devices, i.e., the capacitors, of multiple submodules 312 (with each submodule 312 providing its own voltage), which may be higher than the voltage available from each individual submodule 312.

Accordingly, the submodules 312 work together to permit the valve 324 to provide a stepped variable voltage source. This permits the generation of a voltage waveform output from each valve 324. As such each valve 324 is capable of providing a wide range of complex waveforms.

As discussed above, the power converter 300 may be the second power converter 120 (shown in Figure 1). In this example, the power converter 300 is operating as a VSC. The controller 160 (shown in Figure 1) is communicatively coupled to the power converter 300, and therefore is able to control an operation of the valves 324 to generate an AC voltage waveform at each AC terminal 320A, 320B, 320C, and thereby enable the power converter 300 to, in use, provide power transfer functionality between the DC and AC terminals (i.e. between the transmission medium 130 and the second AC network 150).

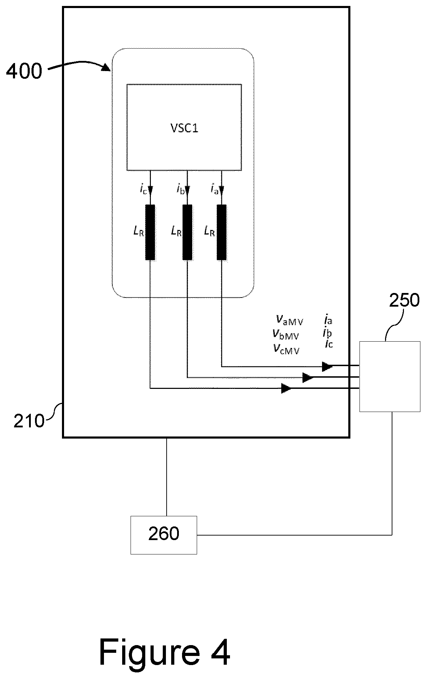

Figure 4 is a schematic illustration (not to scale) showing a more detailed view of the system 200 of Figure 2. As shown in the embodiment of Figure 4, the STATCOM 210 comprises a single VSC 400.

The VSC 400 includes a plurality of valves (for example three valves), each of which extend between two different phases of the third AC network 250. Accordingly, the valves of the VSC 400 are arranged in either a star or delta configuration. Other embodiments of the invention may include fewer than or greater than three phases, depending on the configuration of the AC network 250 to which the STATCOM 210 is connected. In this manner, the arrangement of the STATCOM 210 differs from the arrangement of the power converter 300 shown in Figure 3, because the STATCOM 210 does not comprise DC terminals for connection to a transmission medium. The STATCOM 210 may be connected to another DC source, for example a DC charging circuit.

Each valve in the VSC 400 includes a plurality of series connected submodules (alternatively referred to as chain-link modules). Each submodule is the same as the submodules 312 described above in relation to Figure 3. Each valve may include solely first exemplary submodules, solely second exemplary submodules, or a combination of first and second exemplary submodules. A DC charging circuit may be used to charge the capacitors of the submodules in the VSC 400.

In any event, the provision of a plurality of submodules means that it is possible to build up a combined voltage across each valve, via the insertion of the energy storage devices, i.e., the capacitors, of multiple submodules (with each submodule providing its own voltage), which is higher than the voltage available from each individual submodule.

Accordingly, the submodules work together to permit the valve to provide a stepped variable voltage source. This permits the generation of a voltage waveform output from each valve. As such each valve is capable of providing a wide range of complex waveforms.

The controller 260 is communicatively coupled to the STATCOM 210 to control an operation of the valves to generate an AC voltage waveform between the first and second terminals, and thereby enable the STATCOM 210 to, in use, provide power transfer functionality to or between each phase of the third AC network 250.

A power converter may be operated in a grid-following mode (GFL) or a grid-forming mode (GFM).

In the GFL mode, the power converter utilizes fast current-regulation loops to control active and reactive power exchanged with the AC grid. The power converter uses a current reference from the AC grid for the active component of current to achieve a desired power output. Accordingly, a power converter operating in a GFL mode includes functions that manage the voltage and reactive power in a manner that results in a command for the reactive component of current. Wide-bandwidth current regulators then develop commands for voltage to be applied by the power converter to the AC grid, such that the actual currents closely track the commands. A power converter operating in a GFL mode therefore provides a current-source characteristic.

A power converter operating in a GFM mode provides a voltage-source characteristic, where the phase angle and magnitude of the voltage are controlled to achieve the regulation functions demanded by the grid. With this structure, current will flow according to the demands of the grid while the converter contributes to establishing a voltage and frequency for the grid. This characteristic is comparable to conventional generators based on a turbine driving a synchronous machine.

A conventional GFM control method may use a different synchronization method compared to a conventional Phase-Locked Loop (PLL) based GFL control method. GFM control methods tend to need active power synchronization (APS). In a STATCOM application (for example the STATCOM shown in Figure 4), the active power requirement tends to be directly linked to the submodules DC link voltage that are present in the power converter of the STATCOM (for example the VSC 400 in Figure 4). Therefore, a conventional GFM control method may generate the active power reference needed for APS by utilising the DC link voltage of the submodules in the power converter of the STATCOM.

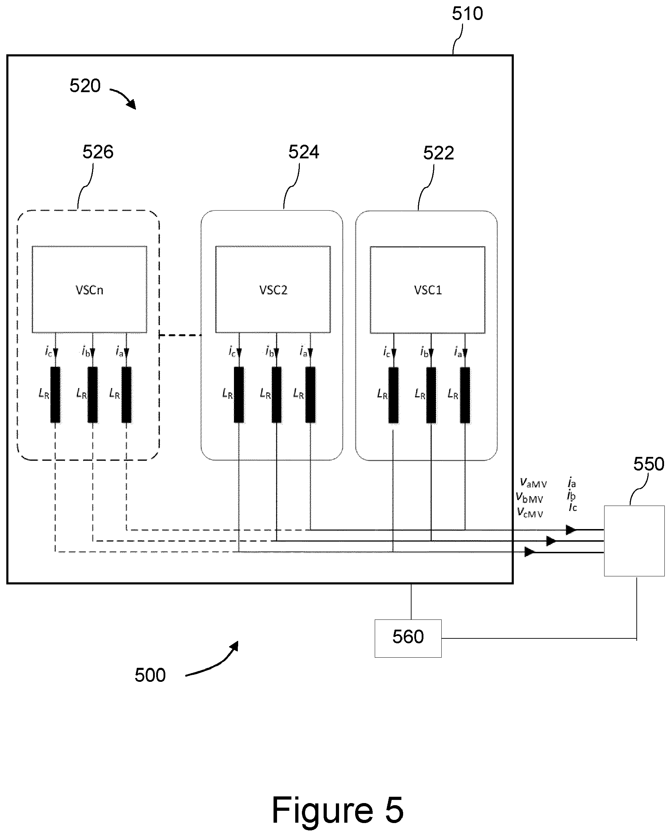

This method tends to work when the system comprising the STATCOM consists of only one power converter. However, in some applications, it is desired to have a STATCOM that has two (or multiple) power converters connected in parallel. Such an arrangement is shown in Figure 5.

Figure 5 is a schematic illustration (not to scale) showing a system 500 comprising a STATCOM 510 that has a plurality of power converters connected in parallel. The system 500 has an arrangement similar to the arrangement discussed above in relation to Figure 2, in that the system 500 comprises a controller 560 connected to an AC network 550 and a STATCOM 510. The STATCOM 510 is connected to the AC network 550.

In the embodiment shown in Figure 5, the STATCOM 510 comprises a plurality of power converters 520. In this example, the plurality of power converters 520 includes a first power converter 522 and a second power converter 524. However, the disclosure should not be limited thereto. Specifically, the STATCOM 510 can include any number of power converters 510. In this manner, the "nth" power converter is denoted as 526 in Figure 5. For example, the STATCOM 510 can include 3, 4, 5 or more than 5 power converters. Each of the power converters 522, 524, 526 are MMCs operating as VSCs.

When a STATCOM comprises a plurality of power converters, the above-mentioned conventional control methods tend not to work. This is because there are a plurality of power converters operating in a GFM mode, and therefore generating a single active power reference is not straight forward. More importantly, the voltage and total energy of each submodule of each power converter needs to be regulated to the same level with minimal variations among the power converters. This tends to be problematic, and therefore there remains complications in controlling a STATCOM to support an AC network, when the STATCOM has a plurality of power converters each operating in a GFM mode.

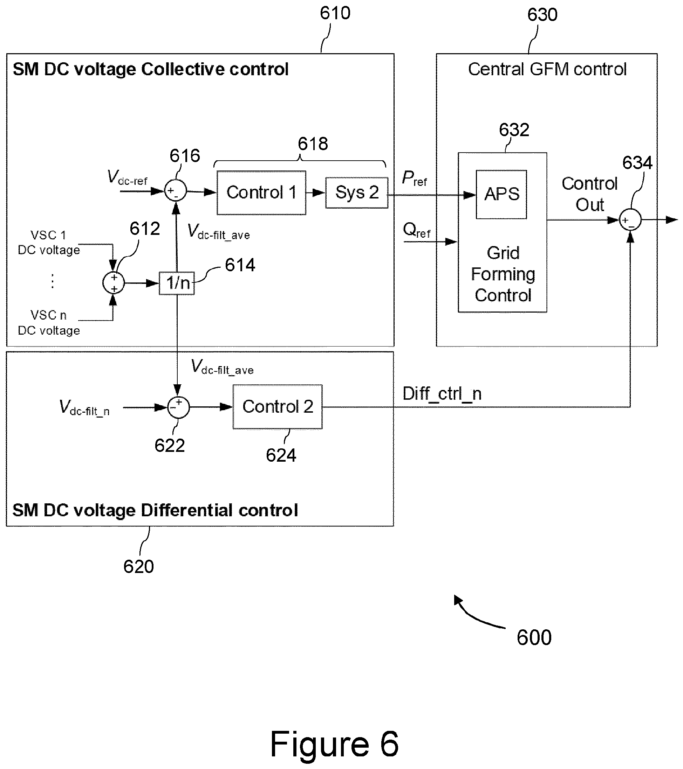

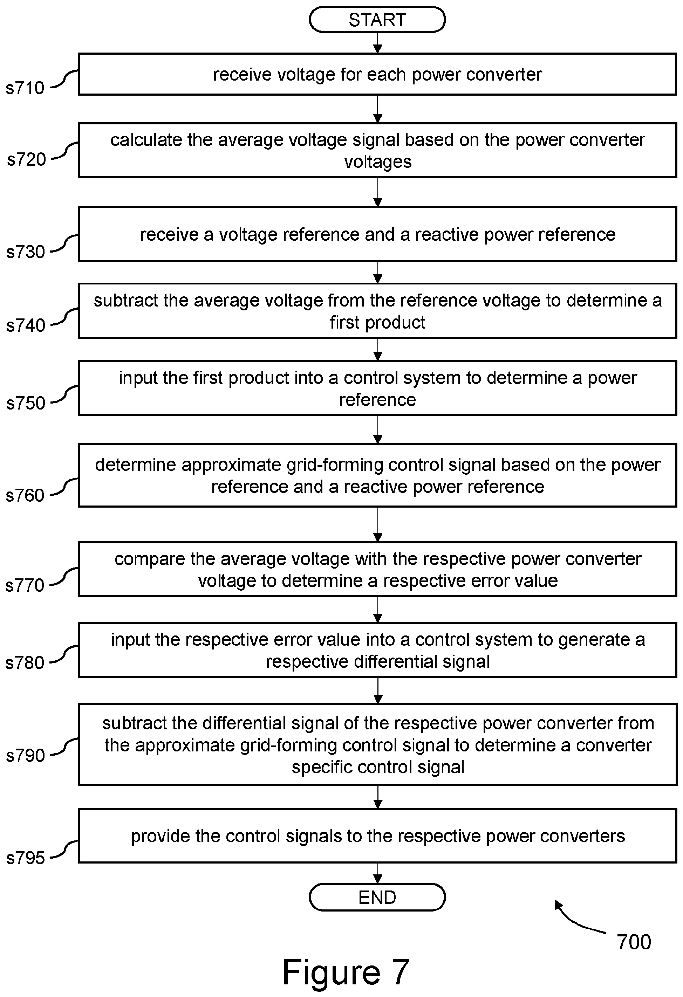

In an embodiment of the invention, in order to control the plurality of power converters 520 in a GFM mode to support the AC network 550, the controller 560 is configured to operate in accordance with a control system 600 (shown in Figure 6) and a method 700 (as shown in Figure 7).

Figure 6 is a schematic illustration (not to scale) showing a control system 600 in accordance with an embodiment of the invention. The controller 560 of Figure 5 may be configured to implement the control system 600, in order to control the plurality of power converters 520 in the STATCOM 510 in a GFM mode. In other embodiments, any of the controllers 160, 260, 560 described herein may be configured to implement the control system 600.

The control system 600 comprises a collective control block 610, a differential control block 620, and a GFM control block 630.

Each of the control blocks 610, 620, 630 can be implemented on a grid-side controller. A grid-side controller is a controller that is not local to, or does not reside in, any particular component of a system. For example, the controller 560 may be a grid-side controller because it does not belong or reside within any particular component of the system 500. The controller 560 may thus be implemented at a grid level by shared or network-based computational resources. The controller 560 can thus easily and readily be programmed or re-programmed (i.e. updated) from an external source, as the requirements of the controller 560 or system 500 change.

In this manner, a grid-side controller is different from a local (none-grid-side) controller. A local controller may reside locally in a particular component of a system. A local controller may be implemented through, for example, a Field Programmable Gate Array (FPGA). An FPGA may require manual intervention to be programmed or re-programmed (i.e. updated).

The benefits of the controller 560 being a grid-side controller are therefore apparent and readily understood to the person skilled in the art.

The arrangement of the control system 600 will now be described in more detail.

Generally, the collective control block 610 is for determining a power reference signal that can be used to determine the active power synchronization (APS) in a GFM control method. The differential control block 620 is for determining a differential signal for each power converter 522, 524, 526 of the plurality of power converters 520 of Figure 5. The GFM control block 630 is for determining a grid forming control signal for each power converter 522, 524, 526 of the plurality of power converters 520 based on the power reference signal from the collective control block 610 and the differential signals from the differential control block 620. The GFM control block 630 is able to output a specific control signal for each power converter 522, 524, 526 of the plurality of power converters 520. The specific control signals enable each power converter 522, 524, 526 of the plurality of power converters 520 to operate in a GFM mode to collectively support the AC network 550.

The collective control block 610 is arranged as follows. A plurality of DC voltage signals is received as an input. The plurality of DC voltage signals comprises voltage signals that each represent a voltage from one of the power converters 522, 524, 526 of the plurality of power converters 520. In this embodiment, each voltage signal is a time varying average (or sliding average) of the voltage of the submodules of the respective power converter 522, 524, 526. Each voltage signal is thus an internal voltage of its respective power converter. The voltage signal may be filtered to improve the signal integrity.

The plurality of DC voltage signals is provided to a first node 612. The first node 612 is configured to sum its inputs and output the result to a second node 614.

The second node 614 is configured to divide its input by n, wherein n is the total number of power converters in the plurality of power converters 520. In this manner, the first and second nodes are configured to calculate an average voltage signal of the plurality of DC voltage signals. In this example, the average voltage is a mean average of the plurality of DC voltage signals. The second node outputs its result to a third node 616 and a fourth node 622.

At the third node 616, the collective control block 610 receives a DC reference voltage. The DC reference voltage is a reference value, for example 1kV, of the desired voltage for the power converters 522, 524, 526. The third node 616 is configured to compare the DC reference voltage to the output from the second node 614 (i.e. the average voltage signal) and output the result to a first control system 618. In this manner, the third node 616 determines the difference (i.e., an error value) between the DC reference voltage and the average voltage signal.

The first control system 618 receives the output from the third node 616. The first control system 618 implements a Proportional-Integral (PI), or Proportional-Integral-Derivative (PID) control system to determine the power reference based on the output from the third node 616.

In this manner the control block 610 determines a power reference signal that can be used to determine the APS in a GFM control system.

The differential control block 620 is arranged as follows. At a fourth node 622, the differential control block 620 receives a voltage signal from one of the power converters 522, 524, 526. In this example, the voltage signal is from the first power converter 522.

The voltage signal from the first power converter 522 is one of the voltage signals provided to the first node 612 as discussed above. The fourth node 622 also receives the average voltage signal from the second node 614. The fourth node 622 is configured to compare the voltage signal of the first power converter 522 to the average voltage signal and output the result to a second control system 624. In this manner, the fourth node 622 determines the difference (i.e., an error value or a difference value) between the voltage signal from the first power converter 522 and the average voltage signal.

The second control system 624 receives the output from the fourth node 622. The second control system 624 implements a PI or PID control system to determine a differential signal for the first power converter 522 based on the output from the fourth node 622. In this manner, the differential control block 620 determines a differential signal for the first power converter 522. The differential control block 620 provides the differential signal for the first power converter 522 to the GFM control block 630.

The differential control block 620 is further configured to determine a differential signal for the remaining power converters 524, 526 of the plurality of power converters, in the same manner as described above in relation to the first power converter 522.

In particular, the fourth node 622 is configured to receive the voltage signal from the second power converter 524. The fourth node 622 is configured to compare the voltage signal of the second power converter 524 to the average voltage signal and output the result to the second control system 624. The second control system 624 is configured to implement a PI or PID control system to determine a differential signal for the second power converter 524 based on the output from the fourth node 622. In this manner, the differential control block 620 determines a differential signal for the second power converter 524. The differential control block 620 provides the differential signal for the second power converter 524 to the GFM control block 630.

In particular, the fourth node 622 is configured to receive the voltage signal from the nth power converter 526. The fourth node 622 is configured to compare the voltage signal of the nth power converter 526 to the average voltage signal and output the result to the second control system 624. The second control system 624 is configured to implement a PI or PID control system to determine a differential signal for the nth power converter 526 based on the output from the fourth node 622. In this manner, the differential control block 620 determines a differential signal for the nth power converter 526. The differential control block 620 provides the differential signal for the nth power converter 526 to the GFM control block 630.

In this manner the differential control block 620 determines a differential signal for each power converter 522, 524, 526 of the plurality of power converters 520. The differential signal for each power converter is provided to the GFM control block 630, as discussed in more detail below, to determine a GFM control signal for each power converter 522, 524, 526.

The GFM control block 630 is arranged as follows. The GFM control block 630 receives the power reference output from the collective control block 610. The GFM control block 630 also receives a reactive power reference from an external source, such as a higher-level grid controller. The power reference and reactive power reference are received at a third control system 632.

The third control system 632 is a grid-forming control system. The third control system 632 uses the power reference to determine the active power synchronization (APS). APS typically includes implementing a swing equation to emulate synchronous machine behaviour and to determine a synchronization signal of the power converter which replaces a conventional PLL based synchronization signal. US5798633A is related to a battery energy storage power conditioning system, and describes swing equations and APS in more detail.

The third control system 632 uses the APS and the reactive power reference to determine a grid-forming control signal. The output of the third control system 632 is the grid-forming control signal. However, the grid-forming control signal is an approximate grid-forming control signal due to the fact that the power reference was based on the average voltage signal of all of the power converters 522, 524, 526 of the plurality of power converters 520. Therefore, if the approximate grid-forming control signal was output directly to the power converters 522, 524, 526, it may not be suitable as the power converters 522, 524, 526 may drift over time causing the system 500 to become unstable, which may distort the AC network 550, or due to protective measures in the system 500 cause the power converters 522, 524, 526 to enter a blocked state or become disconnected from the AC network 550.

In this manner, the approximate grid-forming control signal is a first control signal for grid-forming, and the first control signal is based at least partly on the average voltage and a reference voltage.

The GFM control block 630 therefore further comprises a fifth node 634. The fifth node 634 receives the approximate grid-forming control signal output from the control system 632, and a differential signal for one of the power converters 522, 524, 526 from the differential control block 620. In this example, the fifth node 634 receives the differential signal for the first power converter 522.

The fifth node 634 is configured to subtract the differential signal of the first power converter 522 from the approximate grid-forming control signal. In this manner, the fifth node 634 determines a specific GFM control signal for the first power converter 522. The specific GFM control signal for the first power converter 522 is a second control signal.

The fifth node 634 outputs the specific control signal for the first power converter 522 to the first power converter 522. Alternatively, the fifth node 634 may output the specific control signal for the first power converter 522 to the STATCOM 510 with an appropriate identifier, and the STATCOM 510 may forward the specific control signal to the first power converter 522.

The GFM control block 630 is further configured to determine a specific control signal for the remaining power converters 524, 526 of the plurality of power converters, in the same manner as described above in relation to the first power converter 522.

In particular, for the second power converter 524, the fifth node 634 is configured to subtract the differential signal of the second power converter 524 from the approximate grid-forming control signal. In this manner, the fifth node 634 determines a specific GFM control signal for the second power converter 524. The specific GFM control signal for the second power converter 524 is also a second control signal.

In particular, for the nth power converter 526, the fifth node 634 is configured to subtract the differential signal of the nth power converter 526 from the approximate grid-forming control signal. In this manner, the fifth node 634 determines a specific GFM control signal for the nth power converter 526. The specific GFM control signal for the nth power converter 526 is also a second control signal.

In this manner, the GFM control block 630 is able to determine a plurality of second control signals for grid-forming. Each second control signal in the plurality of second control signals is for a respective power converter 522, 524, 526 of the plurality of power converters 520. Each second control signal allows (i.e., it enables or causes) its respective power converter 522, 524, 526 to operate in a GFM mode, such that the plurality of power converters 520 are able to collectively support the AC network 550 in a stable manner. This is possible because the respective differential signal of each power converter is subtracted from the approximate grid-forming control signal, and therefore any voltage drifting from each power converter tends to be eliminated. Thus, each power converter 522, 524, 526 of the plurality of power converters 520 is provided with a specific GFM control signal.

Additionally, the control system 600 tends to only require one grid-forming control system or grid-forming controller (implemented in the GFM control block 630) which eliminates the need for having multiple GMF control systems for each power converter 522, 524, 526 of the plurality of power converters 520. This tends to both improve the reliability and stability of the operation of the plurality of power converters 520 in a GFM mode, because multiple GFM control systems are not competing with one another in establishing the grid's electrical requirements. Additionally, the costs and/or resources required to implement the control systems for the plurality of power converters 520 tends to be reduced because only one GFM control system (or controller) is required.

Figure 7 is a process flow chart showing steps of a method 700 for controlling a plurality of power converters. In this embodiment, the method 700 is implemented by the controller 560 in the system 500. In other embodiments, any of the controllers 160, 260, 560 described herein may be configured to implement the method 700.

The method 700 may specifically be used for controlling a plurality of power converters connected in parallel in a grid-forming mode.

At step s710, the controller 560 receives a voltage for each power converter 522, 524, 526 of the plurality of power converters 520.

At step s720, the controller 560 calculates an average voltage of the plurality of power converters 520 based on the voltage of each power converter 522, 524, 526. The average voltage may be calculated by summing the voltage of each power converter 522, 524, 526, and dividing the summed result by the number of power converters in the plurality of power converters 520. The voltage of each power converter 522, 524, 526 may be a time averaged voltage. The time averaged voltage may be a DC-link voltage of the submodules or valves in the respective power converter 522, 524, 526. The voltage of each power converter 522, 524, 526 may also be filtered to improve the signal integrity.

In this manner, the controller 560 acquires an average voltage of the plurality of power converters 520.

At step s730, the controller 560 receives a reference voltage and a reactive power reference from an external controller. The reference voltage may come from the same or a different external controller as the reactive power reference. The reference voltage is a desired voltage of the power converters 522, 524, 526. The reactive power reference is used for determining the GFM control, and it determined by a higher-level grid controller.

At step s740, the controller 560 subtracts the average voltage (determined at step s720) from the reference voltage to determine a first product.

At step s750, the controller 560 inputs the first product into a PI or PID controller to generate a power reference. The power reference will be used to determine an approximate grid-forming control signal.

At step s760, the controller 560 inputs the power reference and the reactive power reference into a grid-forming control system to generate an approximate grid-forming control signal.

In this manner, the controller 560 determines an approximate grid-forming control signal based on the average voltage and the reference voltage. The approximate grid-forming control signal is a first control signal for grid-forming.

At step s770, the controller 560 compares the average voltage with the voltage of each power converter 522, 524, 526 to determine an error value for each respective power converter 522, 524, 526. The error value is a difference between the average voltage and a voltage of the respective power converter 522, 524, 526. For example, the controller 560 compares the average voltage with the voltage of the first power converter 522 to determine an error value for the first power converter 522. The controller 560 compares the average voltage with the voltage of the second power converter 524 to determine an error value for the second power converter 524. The controller 560 compares the average voltage with the voltage of the nth power converter 526 to determine an error value for the nth power converter 526. In this manner, at step s770 the controller 560 determines an error value for each power converter 522, 524, 526 of the plurality of power converters 520.

At step s780, the controller 560 inputs the respective error value from each power converter 522, 524, 526 into a PI or PID control system to generate a differential signal for each power converter 522, 524, 526.

In this manner, the controller 560 determines the differential signal for each power converter 522, 524, 526 based on the average voltage and the voltage of the respective power converter 522, 524, 526.

In this manner, the controller acquires a differential signal for each power converter 522, 524, 526 of the plurality of power converters 520 based on the average voltage and a voltage of the respective power converter 522, 524, 526. The differential signal represents a difference between the average voltage and the voltage of the respective power converter 522, 524, 526.

At step s790, the controller 560 subtracts the differential signal of a respective power converter 522, 524, 526 from the approximate grid-forming control signal to determine a control signal for the respective power converter 522, 524, 526. The step s790 is performed for each power converter 522, 524, 526 separately.

For example, the controller 560 subtracts the differential signal of the first power converter 522 from the approximate grid-forming control signal to determine a control signal for the first power converter 522. The controller 560 subtracts the differential signal of the second power converter 524 from the approximate grid-forming control signal to determine a control signal for the second power converter 524. The controller 560 subtracts the differential signal of the nth power converter 526 from the approximate grid-forming control signal to determine a control signal for the nth power converter 526.

The control signal for each power converter 522, 524, 526 is an error corrected version of the approximate grid-forming control signal for that particular power converter 522, 524, 526. As a result, a specific GFM control signal is determined for each power converter 522, 524, 526 that allows the respective power converter to support an AC network or grid in a grid-forming mode without effecting the operation of the other power converters in the plurality of power converters 520. In other words, the control signal for each power converter 522, 524, 526 is an error corrected version of the approximate grid-forming control signal that is able to prevent each power converter 522, 524, 526 from drifting during operation of the respective power converter 522, 524, 526.

In this manner, the controller determines a plurality of second control signals for grid-forming. Each second control signal in the plurality of second control signals is for a respective power converter 522, 524, 526 of the plurality of power converters 520. Each second control signal is based at least partly on the approximate grid-forming control signal and the differential signal of the respective power converter 522, 524, 526.

At step s795, the controller 560 outputs the plurality of second control signals for controlling the power converter 522, 524, 526 in a grid-forming mode. The controller 560 outputs the plurality of second control signals to power converter controllers that are local to the respective power converters 522, 524, 526. The power converter controllers are able to implement and thereby control the power converters 522, 524, 526 according to the control signals.

As a result, each of the respective power converters 522, 524, 526 are able to operate in a grid-forming mode coherently.

In this manner, the method 700 is able to determine a control signal for each power converter 522, 524, 526 of the plurality of power converters 520. The specific control signals allow each power converter 522, 524, 526 of the plurality of power converters 520 to operate in a GFM mode to collectively support the AC network 550 in a stable manner. This is possible because the respective differential signal of each power converter is subtracted from the approximate grid-forming control signal, and therefore any voltage drifting from each power converter tends to be eliminated. Thus, each power converter 522, 524, 526 of the plurality of power converters 520 is provided with a specific GFM control signal.

It is to be understood that the control systems and methods disclosed herein can generally be used to control any power converter. Thus, the invention is equally applicable to the example of Figure 1 wherein the controller 160 is connected to the second power converter 120, as it is to the example of Figures 2 and 4 wherein the controller 260 is connected to the STATCOM 210. Importantly, across all embodiments, the controller is configured to control a power converter.

The controller 160, 260, 560 may comprise a transceiver arrangement which may comprise a separate transmitter and receiver. The transceiver arrangement may be used to operatively communicate with other components or features of embodiments described herein either directly or via a further interface such as a network interface. The transceiver arrangement may for instance send and receive control signals using transmitter and receiver. The control signals may contain or define electrical control parameters such as reference currents or reference voltages. The controller 160, 260, 560 may be communicatively coupled to the power converter, by optical means; and/or wired means; and/or wireless means.

The at least one processor is capable of executing computer-readable instructions and/or performing logical operations. The at least one processor may be a microcontroller, microprocessor, central processing unit (CPU), application-specific integrated circuit (ASIC), field programmable gate array (FPGA) or similar programmable or unprogrammable controller. The processor is communicatively coupled to the memory and may in certain embodiments be coupled to the transceiver.

The memory may be a computer readable storage medium. For instance, the memory may include a non-volatile computer storage medium. For example, the memory may include a hard disk drive, flash memory etc.

The controller 160, 260, 560 may further comprise a user input device and/or output device.

The controller 160, 260, 560 may additionally include a user input device interface and/or a user output device interface, which may allow for visual, audible, or haptic inputs/outputs. Examples include interfaces to electronic displays, touchscreens, keyboards, mice, speakers, and microphones.

Although in the above-described embodiments the STATCOM 210 (shown in Figures 2 and 4) is not connected to a DC source, the disclosure should not be limited thereto. In other embodiments, the STATCOM 210 is connected to a DC source, and the VSC 400 is arranged as an MMC, for example according to the arrangement of the power converter 300 described above in relation to Figure 3.

Although in the above-described embodiments the first control system 618 implements a PI or PID control system to determine the power reference, the disclosure should not be limited there to. In other embodiments, first control system 618 can implement any control system that is suitable for determining a power reference.

Although in the above-described embodiments the second control system 624 implements a PI or PID control system to determine the differential signals, the disclosure should not be limited there to. In other embodiments, the second control system 624 can implement any control system that is suitable for determining the differential signals.

Although in the above-described embodiments average voltage is calculated by summing the voltage of each power converter 522, 524, 526, and dividing the summed result by the number of power converters in the plurality of power converters 520, the disclosure should not be limited there to. In other embodiments, the average voltage may be a median or modal average, or any other type of statistical average, instead of the mean average described above.

Although in the above-described embodiments each voltage signal is a time varying average (or sliding average) of the voltage of the submodules of the respective power converter 522, 524, 526, the disclosure should not be limited there to. In other embodiments, each voltage signal is a time varying average (or sliding average) of the voltage of the valves of the respective power converter 522, 524, 526.

Although in the above-described embodiments each voltage signal is an internal voltage of its respective power converter, the disclosure should not be limited there to. In other embodiments, each voltage signal is an external voltage of its respective power converter.

A system that uses a collective energy control signal coming from VSCs submodule DC voltage to generate reference active power for main GFM control.

A single core GFM control unit is used irrespective of the number VSCs in the STATCOM design.

Differential control signal is used to correct the GFM output control signal on active power (current) to ensure VSCs DC voltage do not drift from each other.

STATCOM with multiple VSCs can be seen as a single GFM unit connected to the network.

## Claims

1. A method for controlling a plurality of power converters connected in parallel in a grid-forming mode, the method comprising:
acquiring, at a controller, an average voltage of the plurality of power converters;
determining, by the controller, a first control signal for grid-forming, wherein the first control signal is based at least partly on the average voltage and a reference voltage;
acquiring, by the controller, for each power converter of the plurality of power converters, a differential signal based on the average voltage and a voltage of the respective power converter;
determining, by the controller, a plurality of second control signals for grid-forming, wherein each second control signal in the plurality of second control signals is for a respective power converter of the plurality of power converters, wherein each second control signal is based at least partly on the first control signal and the differential signal of the respective power converter; and
outputting, by the controller, the plurality of second control signals, for controlling the plurality of power converters in the grid-forming mode.

2. The method of claim 1, wherein the step of acquiring the average voltage of the plurality of power converters comprises:
receiving, at the controller, the voltage for each power converter of the plurality of power converters; and
calculating, by the controller, the average voltage based on the voltage for each power converter.

3. The method of claim 2 wherein the step of acquiring, for each power converter of the plurality of power converters, the differential signal comprises:
determining, by the controller, for each power converter of the plurality of power converters, the differential signal based on a difference between the average voltage and the voltage of the respective power converter.

4. The method of claim 3, wherein determining the differential signal for each respective power converter comprises comparing the average voltage with the voltage of the respective power converter to determine a respective difference, and inputting the respective difference into a first Proportional-Integral, PI, or Proportional-Integral-Derivative, PID, controller to generate the differential signal for each power converter.

5. The method of any one of claims 2 to 4, wherein the voltage of each power converter is a time averaged voltage of the power converter.

6. The method of claim 5, wherein the time averaged voltage is of submodules or valves of the power converter.

7. The method of any preceding claim, wherein the step of determining the first control signal comprises:
subtracting the average voltage from the reference voltage to determine a first product;
determining a power reference based on the first product; and
determining the first control signal based on the power reference.

8. The method of claim 7, wherein the power reference is determined by inputting the first product into a second Proportional-Integral, PI, or Proportional-Integral-Derivative, PID, controller to generate the power reference.

9. The method of claims 7 or 8, further comprising:
receiving, at the controller, a reactive power reference;
wherein the step of determining the first control signal comprises inputting the power reference and the reactive power reference into a grid-forming control system to generate the first control signal.

10. The method of any preceding claim, wherein the step of determining the plurality of second control signals comprises, for each power converter of the plurality of power converters, subtracting the differential signal of the respective power converter from the first control signal.

11. The method of claim 10, wherein subtracting the differential signal of the respective power converter from the first control signal is for correcting an error in the first control signal for each respective power converter, such that the plurality of power converters can operate, as a group, to support an AC network in a grid-forming mode.

12. A controller for controlling a plurality of power converters connected in parallel in a grid-forming mode, the controller configured to:
acquire an average voltage of the plurality of power converters;
determine a first control signal for grid-forming, wherein the first control signal is based at least partly on the average voltage and a reference voltage;
acquire, for each power converter of the plurality of power converters, a differential signal based on the average voltage and a voltage of the respective power converter;
determine a plurality of second control signals for grid-forming, wherein each second control signal in the plurality of second control signals is for a respective power converter of the plurality of power converters, wherein each second control signal is based at least partly on the first control signal and the differential signal of the respective power converter; and
output the plurality of second control signals, to control the plurality of power converters in the grid-forming mode.

13. The controller of claim 12, wherein the controller is a grid-side controller, wherein the controller is further configured to output the plurality of second control signals to converter controllers of the respective power converters.

14. The controller of claim 12 or 13, wherein each of the plurality of power converters are modular multilevel converters.

15. A system comprising:
a static synchronous compensator, STATCOM, comprising a plurality of power converters connected in parallel, wherein the STATCOM is connected to an AC network; and
the controller of any one of claims 12-14, configured to output the plurality of second control signals, to control the plurality of power converters in a grid-forming mode, to support the AC network.
